# EUROPEAN PATENT SPECIFICATION

(11) **EP 2 248 937 B1**
(45) Date of publication and mention of the grant of the patent: **17.04.2019**
(21) Application number: 08870827.6
(22) Date of filing: 10.11.2008
(51) Int. Cl.: D06F 39/12, D06F 37/26, D06F 37/20, D06F 37/22

(54) **WASHING MACHINE**
WASCHMASCHINE
MACHINE À LAVER

(30) Priority: 17.01.2008 JP 2008008134
(43) Date of publication of application: 10.11.2010
(73) Proprietor: HAIER GROUP CORPORATION & QINGDAO HAIER WASHING MACHINE CO., LTD., Hi-Tech Zone Qingdao Shandong 266101 (CN)
(72) Inventor: KAWAGUCHI, Tomonari, Otsu-shi Shiga 520-2132 (JP); HIRASAWA, Yuji, Oura-gun Gunma 370-0523 (JP)
(74) Representative: Glawe, Delfs, Moll
(86) International application number: PCT/JP2008/070425
(87) International publication number: WO 2009/090790

(56) References cited:
- DE-A1- 4 327 916
- GB-A- 2 292 391
- JP-A- 2005 058 725
- JP-A- 2007 167 197
- JP-A- 2007 181 603
- US-A1- 2005 103 064
- US-A1- 2006 225 466

## Description

### TECHNICAL FIELD

The present invention relates to a washing machine.

### BACKGROUND ART

A washing machine is generally placed on an installation surface such as of a drain pan. The washing machine includes a base provided at a lower end of a main body thereof for supporting the entire washing machine in contact with the installation surface (see, for example, Patent Document 1).

The washing machine disclosed in Patent Document 1 includes an outer tub capable of retaining water, and a drum (rotary drum) rotatably provided in the outer tub. In this washing machine, the outer tub is attached to the base via a vibration absorbing member such as dampers, and supported by the dampers so as to be levitated from the base. The washing machine generally includes a frame to which decorative panels and the like defining an outer shell of the washing machine are fixed. The frame has, for example, a generally elongated hollow cuboidal shape, which surrounds the outer tub. Lower portions of front, rear, left and right faces of the frame are fixed to the base by screws.

Patent Document 1: JP-A-2007-181603

A washing machine according to the preamble of claim 1 is disclosed in JP 2007 167197 A.

### DISCLOSURE OF THE INVENTION

### PROBLEMS TO BE SOLVED BY THE INVENTION

In the washing machine, the outer tub is vibrated due to rotation of the drum. The vibrations are often transmitted to the base because of insufficient absorption of the vibrations by the dampers. Where the lower portions of the front, rear, left and right faces of the frame are fixed to the base by the screws (i.e., the frame is firmly fixed to the base), the vibrations of the base are disadvantageously transmitted to the frame.

In view of the foregoing, it is an object of the present invention to provide a washing machine which is capable of substantially preventing the vibrations of the outer tub occurring due to the rotation of the rotary drum from being transmitted from the base to the frame.

### MEANS FOR SOLVING THE PROBLEMS

This object is achieved by a washing machine according to claim 1.

According to an inventive aspect of claim 2, the washing machine further comprises a control box incorporating a control circuit for controlling a laundry process, disposed in a front lower portion of the frame. A lower portion of the rear face plate of the frame is fixed to a rear portion of the base by a screw. The control box is fixed to the second connection plate of the frame by a screw and the control box is unfixed to the base.

According to an inventive aspect of claim 3, the base includes an integral receiving portion which receives the lower portion of the front portion of the frame in the washing machine of claim 1.

According to an inventive aspect of claim 4, the front portion of the frame includes a vertically elongated front left portion, a vertically elongated front right portion and a front connection portion which connects the front left portion and the front right portion, and an upper portion of the control box is fixed to the front connection portion by a screw in the washing machine of claim 1.

According to an inventive aspect of claim 5, the control box is fixed to the front left portion and/or the front right portion by a screw in the washing machine of claim 4.

According to an inventive aspect of claim 6, the washing machine of any of claims 2, 3, 4 and 5 includes an upper member and a lower member covering the front portion of the frame from an outer side, wherein the upper member is fixed to the frame, wherein an upper portion of the lower member engages a lower portion of the upper member with a play, wherein a lower portion of the lower member is fixed to the base by a screw, wherein the lower member is unfixed to the frame.

### EFFECTS OF THE INVENTION

According to the inventive aspect of claim 1, the base defining the lower end of the washing machine body supports the entire washing machine. The outer tub is attached to the base via the plurality of dampers, and supported by the dampers so as to be levitated from the base. The rotary drum is rotatably provided in the outer tub. Therefore, if the outer tub is vibrated due to the rotation of the rotary drum, the vibrations are often transmitted to the base because of insufficient absorption of the vibrations by the dampers.

The lower portions of the left side face, the right side face and the rear face of the frame surrounding the outer tub are screwed to the base, while the front portion of the frame is not fixed to the base. Therefore, the vibrations of the outer tub occurring due to the rotation of the rotary drum are substantially prevented from being transmitted from the base to the front portion of the frame. Thus, the vibrations of the front portion of the frame, i.e., the vibrations of an eye-catching portion of the washing machine, can be suppressed, thereby improving the appearance of the washing machine during the operation.

According to the inventive aspect of claim 4, the upper portion of the control box may be screwed to the front connection portion connecting the vertically elongated front left portion and the vertically elongated front right portion of the front portion of the frame.

According to the inventive aspect of claim 5, the control box may be screwed to the front left portion and/or the front right portion.

According to the inventive aspect of claim 2, the washing machine further comprises a control box incorporating a control circuit for controlling a laundry process, disposed in a front lower portion of the frame. A lower portion of the rear face plate of the frame is fixed to a rear portion of the base by a screw. The control box is fixed to the second connection plate of the frame by a screw and the control box is unfixed to the base.

According to the inventive aspect of claim 3, the lower portion of the front portion of the frame is received by the integral receiving portion of the base, so that displacement of the front portion of the frame can be prevented.

According to the inventive aspect of claim 6, the upper member and the lower member cover the front portion of the frame from the outer side, and the upper member is fixed to the frame. The upper portion of the lower member engages the lower portion of the upper member with a play, and the lower portion of the lower member is screwed to the base. The lower member is not fixed to the frame.

The vibrations of the outer tub occurring due to the rotation of the rotary drum are transmitted from the base to the lower member, but are substantially prevented from being transmitted to the upper member and the front portion of the frame. This suppresses the vibrations of the front portion of the frame and the vibrations of the particularly eye-catching upper member of the front portion, thereby improving the appearance of the washing machine during the operation.

### BRIEF DESCRIPTION OF THE DRAWINGS

Fig. 1 is a perspective view of a washing machine 1 according to one embodiment of the present invention as seen obliquely from the front side.
Fig. 2 is a right side vertical sectional view of the washing machine 1 according to the embodiment of the present invention.
Fig. 3 is a perspective view of the washing machine 1 according to the embodiment of the present invention as seen obliquely from the front side, particularly showing the internal construction of the washing machine 1 with its housing 2 removed.
Fig. 4 is a perspective view of the washing machine 1 as seen obliquely from the rear side, particularly showing the internal construction of the washing machine 1 with its housing 2 removed.
Fig. 5 is a schematic diagram mainly showing the arrangement of water passages and air passages of the washing machine 1.
Fig. 6 is a perspective view of a frame 101 of the housing 2 as seen obliquely from the front side.
Fig. 7 is a perspective view of the washing machine 1 as seen obliquely from the rear side with a rear face of a washing tub 3 thereof being exposed.
Fig. 8 is a perspective view of a control box 12 as seen obliquely from the front side.
Fig. 9 is a front view of a lower portion of the washing machine 1 with its lower cover 104 removed.
Fig. 10 is a left side view of the lower portion of the washing machine 1 in a state corresponding to that shown in Fig. 9.
Fig. 11 is a right side view of the lower portion of the washing machine 1 in a state corresponding to that shown in Fig. 9.
Fig. 12 is a rear view of the lower portion of the washing machine 1 in a state corresponding to that shown in Fig. 9.
Fig. 13 is a diagram of the lower cover 104 attached to a base 102 as seen from the front side.
Fig. 14 is a diagram of the lower cover 104 attached to the base 102 as seen obliquely from the front side.

### DESCRIPTION OF REFERENCE CHARACTERS

1: Washing machine
2: Housing
4: Outer tub
5: Drum
9: Port
10: Door
12: Control box
14: Dampers
101: Frame
102: Base
103: Upper cover
103A: Lower edge portion
104: Lower cover
104A: Upper edge portion
106A: Lower edge portion
107A: Lower edge portion
108A: Lower edge portion
110: Second connection plate
111: Front left portion
112: Front right portion
140: Receiving portions

### BEST MODE FOR CARRYING OUT THE INVENTION

The construction of a washing machine of a so-called oblique drum type according to one embodiment of the present invention will hereinafter be described specifically with reference to the attached drawings.

### 1. Brief Description of Construction and Operation of Washing Machine

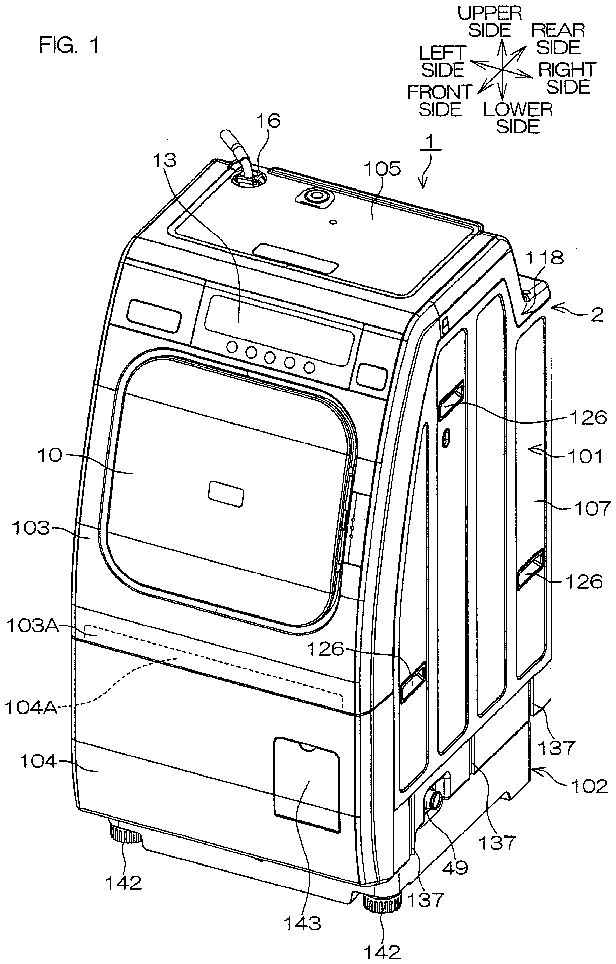

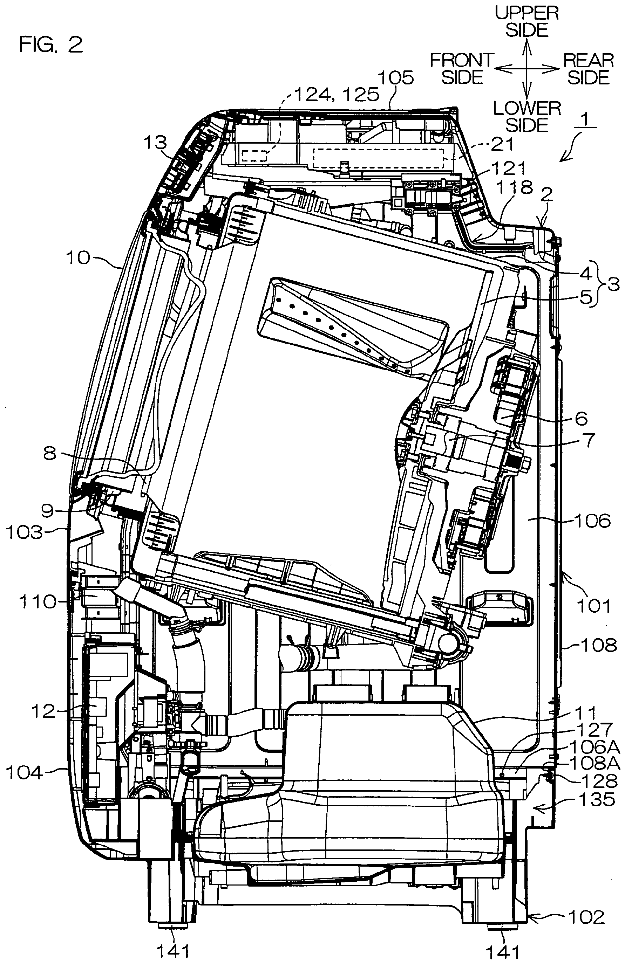

Fig. 1 is a perspective view of a washing machine 1 according to the embodiment of the present invention as seen obliquely from the front side. Fig. 2 is a right side vertical sectional view of the washing machine 1 according to the embodiment of the present invention. Reference will be made to directional arrows shown in these figures (and other figures to be referred to later) for directional notation. The lateral direction and the transverse direction are herein defined to be equivalent to each other. Further, vertical directions include upward and downward directions, and horizontal directions include forward, rearward, leftward and rightward directions.

The washing machine 1 performs a laundry process (a washing step, a rinsing step and a dehydrating step), and a drying process.

As shown in Fig. 1, the washing machine 1 has an elongated housing 2 (washing machine body). A generally upper half of a front face of the housing 2 is inclined obliquely upward toward the rear side.

As shown in Fig. 2, the washing machine 1 includes a washing tub 3 disposed obliquely in the housing 2. The washing tub 3 includes an outer tub 4 in which water is retained in the laundry process, and a drum 5 (rotary drum) rotatably provided in the outer tub 4. In the laundry process and the drying process, the drum 5 is properly rotated about a rotation shaft 7 by a DD motor 6 provided on the rear side of the outer tub 4. The rotation shaft 7 extends obliquely upward toward the front side, so that the washing machine has a so-called oblique drum structure.

The drum 5 has a port 8 provided on the front side thereof and communicating with the inside of the drum 5. The outer tub 4 has a port 9 provided on the front side thereof. The port 8 and the port 9 are opposed to each other and communicate with each other. The port 8 and the port 9 are covered and uncovered with a door 10 attached to the housing 2. With the door 10 being open, garment (laundry) is loaded into and unloaded from the drum 5 through the ports 8 and 9. That is, the ports 8 and 9 are openings through which the garment is loaded and unloaded.

One feature of the washing machine 1 is a tank 11 provided below the washing tub 3 for storing used water (recycling water). The tank 11 has an internal volume of about 8.5 liters, and is adapted to store water used in the rinsing step as will be described later. The stored water is used as heat-exchange water in the drying process and as cleaning water for washing away lint flowing through an air circulation duct. A control box 12 incorporating a control circuit (not shown) for controlling the laundry process is provided in a front lower portion of the housing 2. Further, an operation/display section 13 is provided in a front upper portion of the housing 2. An operation to be performed by the washing machine 1 is set as desired by operating operation keys (not shown) provided on the operation/display section 13. The operation status of the washing machine 1 is displayed on a display panel (not shown) provided on the operation/display section 13.

A blower 21 to be driven in the drying process to be described later and drying heaters A124, B125 for heating air circulated through the washing tub 3 by the blower 21 are disposed in an upper portion of the housing 2.

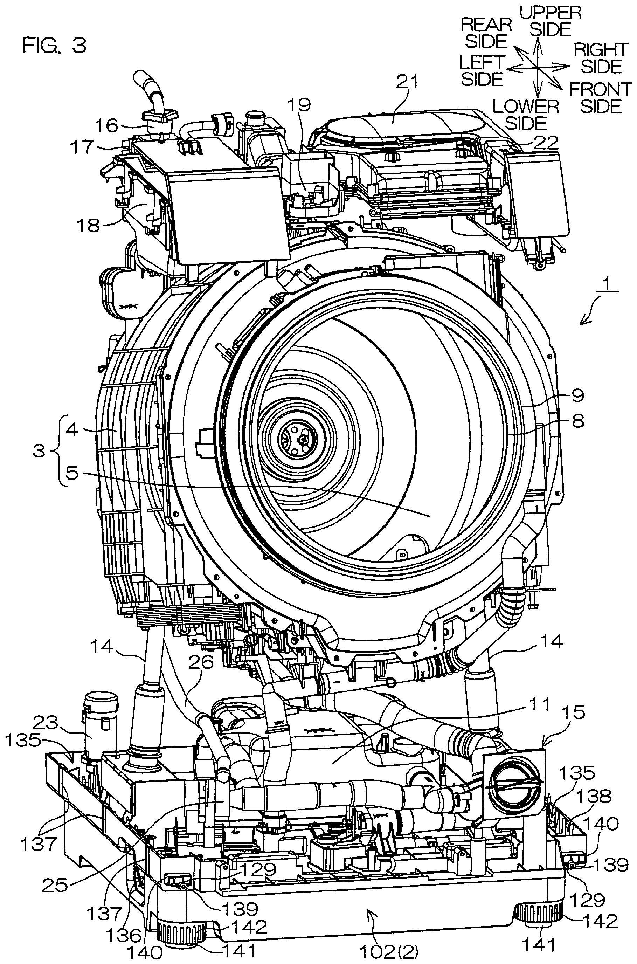

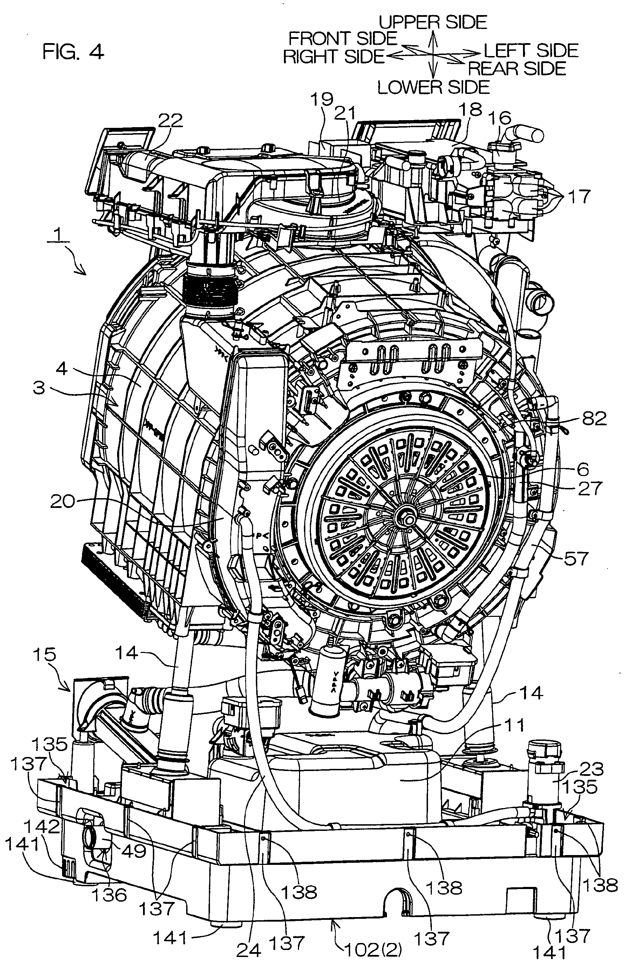

Fig. 3 is a perspective view of the washing machine 1 according to the embodiment of the present invention as seen obliquely from the front side, particularly showing the internal construction of the washing machine 1 with its housing 2 removed. Fig. 4 is a perspective view of the washing machine 1 as seen obliquely from the rear side, particularly showing the internal construction of the washing machine 1 with its housing 2 removed.

In Figs. 3 and 4, the reference character 3 denotes the washing tub, which includes the outer tub 4 and the drum 5. The washing tub 3 is supported by dampers 14 (to be described later in detail). The tank 11 is disposed below the washing tub 3. A filter unit 15 is disposed on a front right side of the tank 11, and connected to the washing tub 3 and the tank 11 through predetermined hoses and pipes.

A water plug 16, a water supply valve 17 for controlling supply of water flowing from the water plug 16 into a water passage, a water supply port unit 18, an ozone generator 19 which generates ozone for preparation of cleaning air, a drying air duct 20 (see Fig. 4), the blower 21 for circulating air through the drying air duct 20 in the drying process, and a drying filter unit 22 for trapping foreign matter such as lint contained in the air circulated through the drying air duct 20 by the blower 21 are provided above the washing tub 3.

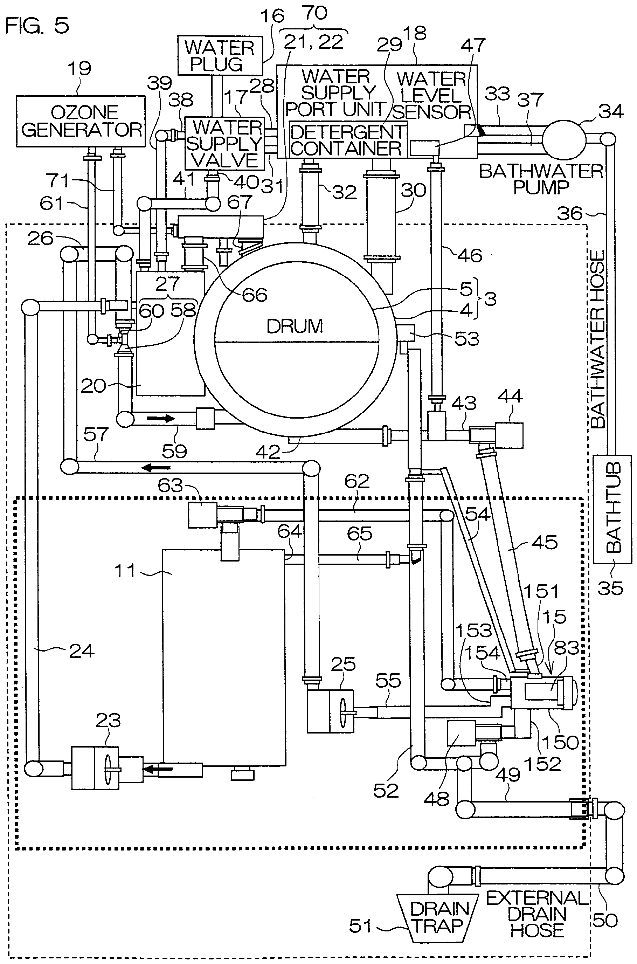

In the washing step, tap water supplied from the water plug 16 is retained in the washing tub 3 by controlling the water supply valve 17. At this time, water containing a detergent dissolved therein can be retained in the washing tub 3 by causing water to flow into the washing tub 3 through a detergent container 29 (see Fig. 5) in the water supply port unit 18. In this state, the drum 5 is rotated by the DD motor 6 (see Fig. 4), whereby the garment contained in the drum 5 is properly washed with the detergent component dissolved in the water. In the rinsing step, water containing no detergent is supplied into the washing tub 3, and the garment is rinsed with this water.

When the water is supplied into the washing tub 3 in the washing step and the rinsing step, the water is pumped out of the washing tub 3 through the filter unit 15 by a circulation pump 25, and the pumped water is guided to a rear upper side of the outer tub 4 through a water circulation passage (a second water circulation passage 57 shown in Fig. 4) and flows down from the upper side and then back into the washing tub 3 from a lower portion of a rear face of the washing tub 3 for circulation. A gas-liquid mixer 27 (see Fig. 4) is provided in the water circulation passage, and the ozone generated by the ozone generator 19 is mixed with the water flowing down from the upper side in the gas-liquid mixer 27. With the ozone mixed with the water, the water is cleaned by the strong oxidation and sterilization power of the ozone. That is, the water in the washing tub 3 is circulated in the laundry process (the washing step and the rinsing step), and cleaned by mixing the ozone with the circulated water for use in the laundry process. As shown in Fig. 4, a projection 82 is provided in the vicinity of the gas-liquid mixer 27 as projecting rearward from a rear face of the outer tub 4 for protecting the gas-liquid mixer 27 attached to the rear face of the outer tub 4 when the outer tub 4 is wobbled to bump against the housing 2.

In the dehydrating step, the drum 5 is rotated at a higher speed by the DD motor 6, and the garment contained in the drum 5 is dehydrated by the centrifugal force generated by the rotation.

In the drying process, air is sucked out of the washing tub 3 from the lower portion of the rear face of the washing tub 3, and guided upward through the drying air duct 20. After foreign matter is filtered away from the air by the drying filter unit 22, the air flows into the washing tub 3 from an upper front side of the washing tub 3 for circulation. High-temperature high-humidity air is heat-exchanged with water to be thereby cooled and dehumidified when being circulated through the drying air duct 20. For this purpose, water is supplied into the drying air duct 20. That is, the washing machine is configured such that water is pumped up from the tank 11 by a drying pump 23, and supplied to a predetermined portion (first position) of the drying air duct 20 via a duct water supply passage 24 such as of a hose. Though not shown, a water passage for supplying the tap water into the drying air duct 20 from the water plug 16 via the water supply valve 17 as required is also provided.

While the construction and the operation of the washing machine 1 have been thus described, the overall construction, particularly water passages and air passages, of the washing machine 1 will be described in detail with reference to Fig. 5.

### 2. Arrangement of Water Passages and Air Passages of Washing Machine

Fig. 5 is a schematic diagram mainly showing the arrangement of the water passages and the air passages of the washing machine 1.

The water plug 16 is connected to an inlet of the water supply valve 17. The water supply valve 17 has four outlets through which the water is selectively caused to flow out. A first outlet port 28 of the water supply valve 17 is connected to the water supply port unit 18, so that the water flows through the detergent container 29 provided in the water supply port unit 18. Thus, the water containing the detergent dissolved therein is supplied into the washing tub 3 through a water supply passage 30 to be thereby retained in the washing tub 3. A second outlet port 31 of the water supply valve 17 is also connected to the water supply port unit 18. Water supplied from the second outlet port 31 does not flow through the detergent container 20, but flows into the washing tub 3 through a water supply passage 32. Further, the water flowing into the water supply port unit 18 from the second outlet port 31 is partly supplied as priming water into a bathwater pump 34 through a priming water passage 33. When the bathwater pump 34 is driven, bathwater in a bathtub 35 is pumped up through a bathwater hose 36, and flows into the water supply port unit 18 through a water passage 37 and then into the washing tub 3 through the water supply passage 30 or the water supply passage 32.

A third outlet port 38 of the water supply valve 17 is connected to a predetermined portion of the drying air duct 20 via a water passage 39. A fourth outlet port 40 of the water supply valve 17 is connected to a predetermined portion of the drying air duct 20 via a water passage 41. The third outlet port 38 has a relatively small diameter, while the fourth outlet port 40 has a relatively great diameter. With the third outlet port 38 being open, therefore, a relatively small amount of water is supplied into the drying air duct 20 through the water passage 39. This water is brought into contact with the circulated high-temperature high-humidity air in the drying air duct 20 for the heat exchange. With the fourth outlet port 40 being open, a relatively great amount of water is supplied into the drying air duct 20 through the water passage 41. This water is used for washing away lint and other foreign matter contained in the air circulated upward in the drying air duct 20 and for washing away \ lint and other foreign matter adhering to an inner wall of the drying air duct 20.

In the laundry process (the washing step and the rinsing step), water is retained in the washing tub 3. A drain port 42 is provided in a lowermost bottom portion of the washing tub 3 (more specifically, in a lowermost bottom portion of the outer tub 4). An inlet port of a first drain valve 44 is connected to the drain port 42 via a water passage 43, and an outlet port of the first drain valve 44 is connected to an inlet port 151 of the filter unit 15 via a water passage 45. With the first drain valve 44 being closed, water can be retained in the washing tub 3 (outer tub 4). A water level in the washing tub 3 is detected by a water level sensor 47 based on a change in pressure in an air hose 46 branched from the water passage 43 and extending upward.

The filter unit 15 includes a case 150, and a filter body 83 accommodated in the case 150 for trapping foreign matter. The case 150 has a drain port 152, a first outlet port 153 and a second outlet port 154 in addition to the aforementioned inlet port 151. An inlet port of a second drain valve 48 is connected to the drain port 152, and an outlet port of the second drain valve 48 is connected to an external drain hose 50 and a drain trap 51 via a drain passage 49. With the first drain valve 44 and the second drain valve 48 being open, the water in the washing tub 3 is drained into the drain trap 51 through the drain port 42, the water passage 43, the first drain valve 44, the water passage 45, the filter unit 15, the drain port 152, the second drain valve 48, the drain passage 49 and the external drain hose 50. One end (lower end) of an overflow water passage 52 is connected to the drain passage 49. The other end (upper end) of the overflow water passage 52 communicates with an overflow port 53 of the outer tub 4. Therefore, if water is retained in the washing tub 3 in excess to a water level not lower than a predetermined level, water overflows from the overflow port 53, and drained into the drain trap 51 through the overflow water passage 52, the drain passage 49 and the external drain hose 50 irrespective of the opening/closing state of the second drain valve 48.

An air pressure adjusting hose 54 is connected to a vertically middle portion of the overflow water passage 52 and the inlet port 151 of the filter unit 15. With the provision of the hose 54, the internal air pressure of the washing tub 3 is equal to an air pressure on the side of the inlet port 151 of the filter unit 15, thereby preventing the back flow of water in the filter unit 15 and other trouble.

One end of a first water circulation passage 55 is connected to the first outlet port 153 of the filter unit 15, and the other end of the first water circulation passage 55 is connected to a suction port of the circulation pump 25. One end of the second water circulation passage 57 is connected to an outlet port of the circulation pump 25. The second water circulation passage 57 extends upward to a position higher than an ordinary water level up to which the water is retained in the washing tub 3, and the other end of the second water circulation passage 57 is connected to a U-turn portion 26 which is U-turned from an upward direction to a downward direction. An upper end of a venturi tube 58 of the gas-liquid mixer 27 is connected to the U-turn portion 26. One end (upper end) of a third water circulation passage 59 is connected to a lower end of the venturi tube 58, and the other end (lower end) of the third water circulation passage 59 is connected to the lower portion of the rear face of the washing tub 3 (outer tub 4).

With the aforementioned arrangement, a predetermined amount of water is retained in the washing tub 3, and the circulation pump 25 is driven with the first drain valve 44 being open and with the second drain valve 48 being closed in the washing step and/or the rinsing step, whereby the water retained in the washing tub 3 is circulated from the drain port 42 through the water passage 43, the first drain valve 44, the water passage 45, the inlet port 151, the case 150, the first outlet port 153, the first water circulation passage 55, the circulation pump 25, the second water circulation passage 57, the U-turn portion 26, the venturi tube 58 and the third water circulation passage 59 into the washing tub 3.

The venturi tube 58 has an air inlet port 60, and the ozone generator 19 is connected to the air inlet port 60 via an air tube 61. If the ozone generator 19 is actuated when water flows through the venturi tube 58, the cleaning air containing the ozone generated by the ozone generator 19 flows through the air tube 61 and then into the venturi tube 58 through the air inlet port 60. A fundamental reason for the flow of the cleaning air into the venturi tube 58 is that there is a pressure difference (negative pressure) caused by the water flowing through the venturi tube 58. When the ozone is mixed with the circulated water, the circulated water is cleaned by the strong oxidation and sterilization power of the ozone. Thus, the laundry process can be performed in the washing tub 3 with the use of the cleaned water.

One end (upper end) of a storage water passage 62 is connected to the second outlet port 154 of the filter unit 15, and the other end (lower end) of the storage water passage 62 is connected to an inlet port of a water storage valve 63. An outlet port of the water storage valve 63 is connected to the tank 11. When the water storage valve 63 is opened with the first drain valve 44 being open, with the second drain valve 48 being closed and with the circulation pump 25 being deactuated after the completion of the rinsing step, for example, the water used for the rinsing operation and retained in the washing tub 3 flows into the tank 11 from the drain port 42 through the water passage 43, the first drain valve 44, the water passage 45, the inlet port 151, the case 150, the second outlet port 154, the storage water passage 62 and the water storage valve 63 by gravity (natural falling). Thus, the water used for the rinsing is stored as recycling water in the tank 11.

An overflow port 64 is provided at an upper portion of the tank 11. One end of a water passage 65 is connected to the overflow port 64, and the other end of the water passage 65 is connected to a middle portion of the overflow water passage 52. If water is retained in the tank 11 to a water level not lower than a predetermined level, the water overflows to the drain trap 51 from the overflow port 64 through the water passage 65, the overflow water passage 52, the drain passage 49 and the external drain hose 50.

In the washing machine 1, the used water is retained in the tank 11, and reused as the recycling water in the drying process.

The washing machine 1 includes the drying air duct 20 to perform the drying process. The drying air duct 20 is disposed outside the washing tub 3 (outer tub 4). The drying air duct 20 is an air duct through which air sucked out of the washing tub 3 through the lower portion of the rear face of the outer tub 4 is circulated to flow into the washing tub 3 from a front upper portion of the outer tub 4. The drying air duct 20 includes a connection pipe 66, a filter blower unit 70 (including the blower 21 and the drying filter unit 22), and a connection pipe 67. As described with reference to Fig. 2, the drying heater A124 and the drying heater B125 (not shown) are provided in the air duct extending from the filter blower unit 70 to the connection pipe 67 for heating the circulated air. For example, semiconductor heaters may be used as the drying heaters.

The air sucked out of the washing tub 3 is dehumidified in the drying air duct 20. Further, the foreign matter such as lint contained in the air circulated through the drying air duct 20 and the foreign matter adhering to the inner wall of the drying air duct 20 are washed away. For this purpose, the recycling water retained in the tank 11 is circulated to flow through the drying air duct 20.

A suction port of the drying pump 23 is connected to the tank 11. One end of the duct water supply passage 24 is connected to an outlet port of the drying pump 23, and the other end of the duct water supply passage 24 is connected to the first position of the drying air duct 20. In the drying process, water flows through the duct water supply passage 24 to be supplied into the drying air duct 20 from the first position of the drying air duct 20 upon actuation of the drying pump 23. As described above, the supplied water is heat-exchanged with the air circulated upward from the lower side in the drying air duct 20, and washes away the lint and other foreign matter contained in the air and the foreign matter adhering to the inner wall of the drying air duct 20.
Water flowing down together with the lint and other foreign matter in the drying air duct 20 further flows into the filter unit 15 from the lower portion of the outer tub 4 through the drain port 42, the water passage 43, the first drain valve 44 and the water passage 45. Then, the lint and other foreign matter are trapped and filtered away in the filter unit 15, and water free from the foreign matter flows back into the tank 11 from the second outlet port 154 through the storage water passage 62 and the water storage valve 63.

The washing machine may be configured such that the water flowing down in the drying air duct 20 is drained, for example, from a lower end (second position) of the drying air duct 20 and flows back into the tank 11 rather than into the outer tub 4.

In the drying process, a great amount of water is required for the heat exchange in the drying air duct 20 and for the removal of the lint and other foreign matter adhering to the inner wall of the drying air duct 20. The washing machine 1 is configured such that the used water stored in the tank 11 is recycled to be used for the heat exchange and the removal of the foreign matter. Thus, drastic water saving can be achieved. Since the water is circulated from the tank 11, the volume of the tank 11 is reduced. Even with the provision of the tank 11, the outer size of the washing machine is not increased.

The ozone generator 19 is connected to the filter blower unit 70 via an air tube 71. In the drying process, the cleaning air containing the ozone generated by the ozone generator 19 is sucked into the filter blower unit 70 upon actuation of the ozone generator 19, and mixed with the air to be circulated into the washing tub 3. As a result, the garment to be dried can be deodorized and sterilized.

### 3. Construction of Housing

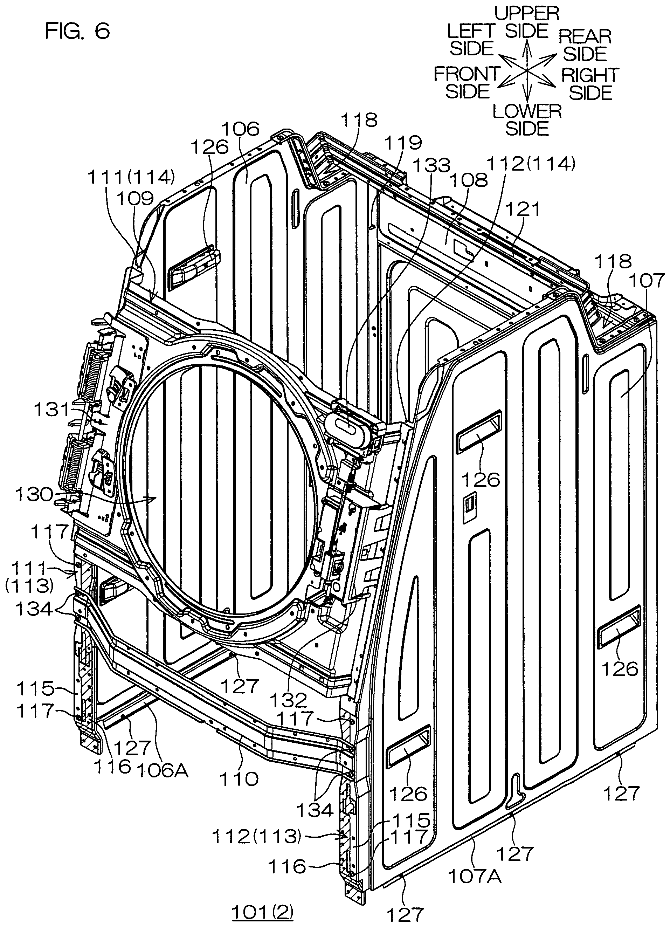

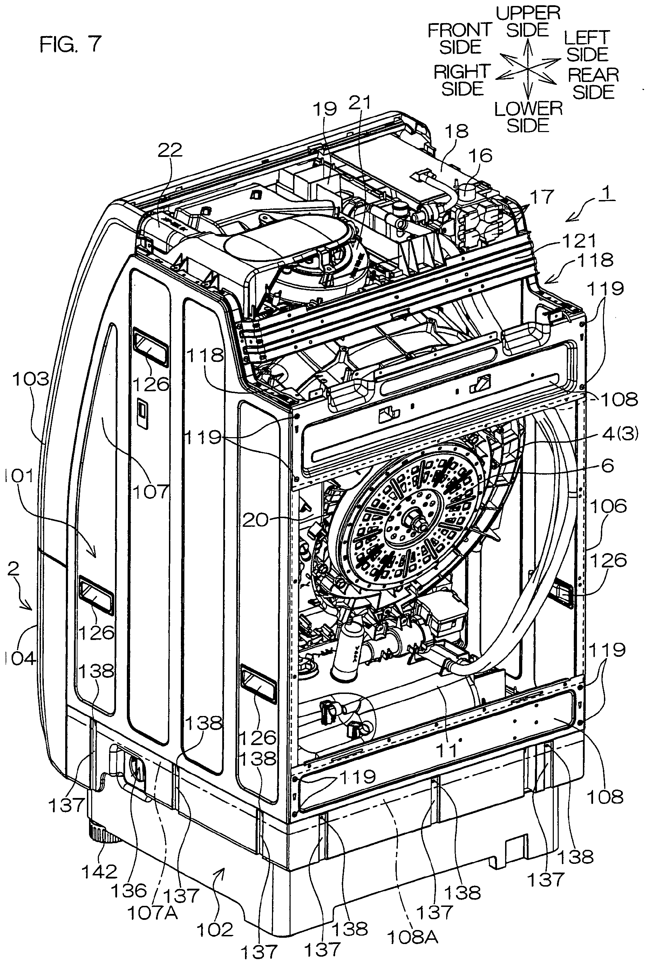

Fig. 6 is a perspective view of a frame 101 of the housing 2 as seen obliquely from the front side. Fig. 7 is a perspective view of the washing machine 1 as seen obliquely from the rear side with the rear face of the washing tub 3 thereof being exposed. In Figs. 4 and 7, hoses are routed around the rear face of the washing tub 3 in slightly different ways.

The housing 2 includes a frame 101 (see Fig. 6), a base 102 (see Fig. 3), an upper cover 103 as an upper member (see Fig. 1), a lower cover 104 as a lower member (see Fig. 1), and a top cover 105 (see Fig. 1).

### (1) Frame

As shown in Fig. 6, the frame 101 is, for example, made of a metal. The frame 101 has a generally elongated hollow cuboidal shape conformable to the housing 2, and has an open top and an open bottom. The frame 101 includes a left side face plate 106, a right side face plate 107, a rear face plate 108, a first connection plate 109, a second connection plate 110 as a front connection portion, and a third connection plate 121.

The left side face plate 106 and the right side face plate 107 have vertically elongated generally rectangular shapes having the same size as seen transversely, and are disposed in transversely spaced opposed relation. The left side face plate 106 and the right side face plate 107 each have a cut-away portion 118 provided in a rear upper portion thereof. The cut-away portion 118 has a generally L-shape as seen from the right side.

A lower edge portion 106A of the left side face plate 106 (a lower portion of a left side face of the frame 101) is offset transversely inward (rightward) from an upper portion of the left side face plate 106. A lower edge portion 107A of the right side face plate 107 (a lower portion of a right side face of the frame 101) is offset transversely inward (leftward) from an upper portion of the right side face plate 107. The lower edge portion 106A and the lower edge portion 107A each include a plurality of screw holes 127 which are arranged in anteroposteriorly spaced relation.

Peripheral portions of the left side face plate 106 and the right side face plate 107 as seen transversely are mostly folded transversely inward. That is, the peripheral portion of the left side face plate 106 is folded rightward, and the peripheral portion of the right side face plate 107 is folded leftward. Here, a front edge of the peripheral portion of the left side face plate 106 is defined as a front left portion 111, and a front edge of the peripheral portion of the right side face plate 107 is defined as a front right portion 112.

The front left portion 111 and the front right portion 112 are each vertically elongated as seen from the front side. More specifically, the front left portion 111 includes a portion (vertical portion 113) extending generally vertically upward from a lower end of a front edge of the left side face plate 106, and a portion (slant portion 114) extending obliquely upward toward the rear side from a middle portion of the front edge of the left side face plate 106. Similarly to the front left portion 111, the front right portion 112 includes a vertical portion 113 and a slant portion 114. The slant portion 114 is disposed in association with the generally upper half (see Fig. 1) of the front face of the housing 2 inclined obliquely upward toward the rear side as described above.

The vertical portions 113 of the front left portion 111 and the front right portion 112 each include a thinner portion 115 and a thicker portion 116 (indicated by diagonally hatched portions). The thinner portion 115 is an integral part of the left side face plate 106 or the right side face plate 107. The thicker portion 116 is separable from the thinner portion 115, and combined with the thinner portion 115 by a screw 117 to reinforce the thinner portion 115 from a transversely inward side and from the rear side. In this state, the thicker portion 116 projects downward from the thinner portion 115. That is, a lower end of the vertical portion 113 is defined by a lower end of the thicker portion 116.

The left side face plate 106 and the right side face plate 107 each have recesses 126 which are recessed transversely inward. The washing machine 1 (see Fig. 1) can be lifted to be moved by hooking one's hands in any of the recesses 126.

The rear face plate 108 has a vertically elongated rectangular shape as seen from the rear side, and provided between a portion of a rear edge of the left side face plate 106 below the cut-away portion 118 and a portion of a rear edge of the right side face plate 107 below the cut-away portion 118. The rear face plate 108 is combined with the left side face plate 106 and the right side face plate 107 by screws 119 (also see Fig. 7). The rear face plate 108 is vertically dividable into three parts. In Fig. 7, a vertically intermediate part (indicated by a broken line) of the rear face plate 108 is removed. A lower edge portion 108A of the rear face plate 108 (a lower portion of the rear face of the frame 101 indicated by a one-dot-and-dash line in Fig. 7) is offset forward from an upper part. The lower edge portion 108A has a plurality of screw holes (not shown) which are arranged in transversely spaced relation.

As shown in Fig. 6, the first connection plate 109 has a transversely elongated rectangular shape as seen from the front side, and is provided between the slant portion 114 of the front left portion 111 and the slant portion 114 of the front right portion 112. The first connection plate 109 is combined with the front left portion 111 and the front right portion 112 by screws not shown. The first connection plate 109 has a round through-hole 130 provided generally at the center thereof as seen from the front side. With the frame 101 incorporated in the washing machine 1, the through-hole 130 is opposed to the aforementioned ports 8 and 9 of the drum 5 and the outer tub 4 (see Fig. 3) from the front side. The garment is loaded into and unloaded from the drum 5 (see Fig. 3) through the ports 8 and 9 as well as the through-hole 130.

On a front surface of the first connection plate 109, a hinge 131 is fixed to a left side of the through-hole 130, and a lock mechanism 132 and a button 133 are provided on a right side of the through-hole 130. Though not shown, the door 10 (see Fig. 1) is supported by the hinge 131. The door 10 is pivoted about an axis of the hinge 131 to cover and uncover the ports 8 and 9 as described above. At this time, the through-hole 130 is also covered and uncovered with the door 10. The lock mechanism 132 locks the door 10 in a closed state. When the button 133 is operated in this state, the door 10 is unlocked to be permitted to be opened.

The second connection plate 110 is transversely elongated as seen from the front side, and is provided between an upper end portion of the vertical portion 113 of the front left portion 111 and an upper end portion of the vertical portion 113 of the front right portion 112 below the first connection plate 109. The second connection plate 110 is combined with the front left portion 111 and the front right portion 112 by screws 134. Thus, the second connection plate 110 connects the front left portion 111 and the front right portion 112. A portion of the second connection plate 110 transversely intermediate between the front left portion 111 and the front right portion 112 slightly projects forward. The first connection plate 109, the second connection plate 110, the front left portion 111 and the front right portion 112 are included in a front portion of the frame 101.

The third connection plate 121 is transversely elongated as seen from the rear side, and is provided between a rear edge portion of the left side face plate 106 defining the cut-away portion 118 of the left side face plate 106 and a rear edge portion of the right side face plate 107 defining the cut-away portion 118 of the right side face plate 107. The third connection plate 121 is combined with the left side face plate 106 and the right side face plate 107 by screws not shown. A portion of the third connection plate 121 transversely intermediate between the left side face plate 106 and the right side face plate 107 projects rearward.

The provision of the first connection plate 109, the second connection plate 110 and the third connection plate 121 prevents transverse deformation of a portion of the frame 101 present forward of the rear face plate 108.

With the frame 101 thus incorporated in the washing machine 1, as shown in Fig. 7, the washing tub 3 (the outer tub 4 and the drum 5) is disposed in the frame 101 (in a space anteroposteriorly and transversely surrounded by the left side face plate 106, the right side face plate 107, the rear face plate 108, the first connection plate 109 and the second connection plate 110). In other words, the frame 101 surrounds the washing tub 3.

Here, the aforementioned control box 12 is disposed in a lower portion of the front portion (front lower portion) of the frame 101.

### (2) Control Box

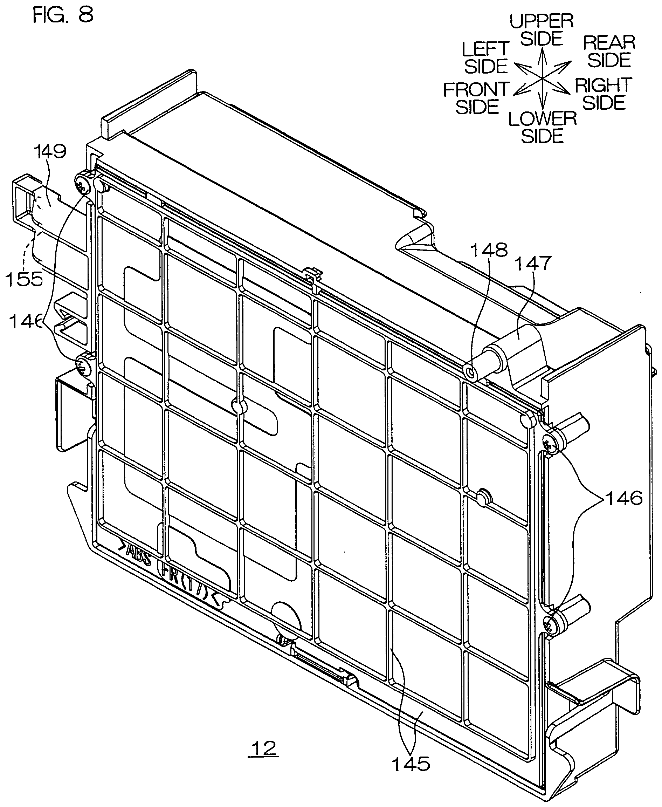

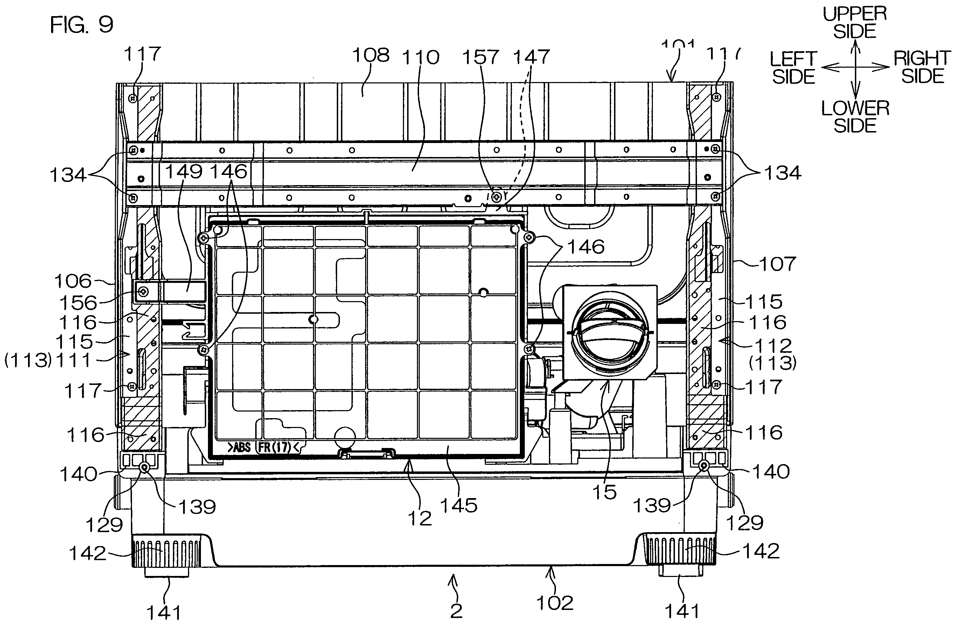

Fig. 8 is a perspective view of the control box 12 as seen obliquely from the front side. Fig. 9 is a front view of a lower portion of the washing machine 1 with the lower cover 104 removed.

As shown in Fig. 8, the control box 12 has a transversely elongated hollow cuboidal shape having a smaller width as measured anteroposteriorly, and a control circuit (not shown) is incorporated in the control box as described above. A front face of the control box 12 is open. A grid cover 145 is fixed to the control box 12 by screws 146 to cover the front face of the control box 12 from the front side. The control box 12 includes a projection 147 integrally provided on a right end portion of an upper face thereof as projecting upward and bent forward. The projection 147 has a screw hole 148 formed in a front end face thereof. The control box 12 includes an arm 149 integrally provided on a left side face thereof as extending leftward. The arm 149 has a through-hole 155 (indicated by a broken line) formed in a left end portion thereof.

As shown in Fig. 9, the control box 12 is provided in a region transversely intermediate between the front left portion 111 and the front right portion 112 below the second connection plate 110 of the frame 101. In this state, the left end portion of the arm 149 of the control box 12 overlaps the front left portion 111 (more specifically, the thicker portion 116 of the vertical portion 113) from the front side, and the projection 147 overlaps the second connection plate 110 from the rear side. A screw 156 extends through the through-hole 155 of the arm 149 (see Fig. 8) to be fixed to the front left portion 111, and a screw 157 extends through the second connection plate 110 to be fixed in the screw hole 148 of the projection 147 (see Fig. 8).

Thus, the control box 12 is screwed to the front portion of the frame 101 (more specifically, the second connection plate 110 and the front left portion 111). More specifically, a left side portion of the control box 12 is screwed to the front left portion 111, and an upper portion of the control box 12 is screwed to the second connection plate 110.

Where the control box 12 is fixed to the front portion of the frame 101 by the screws, the control box 12 is not necessarily required to be screwed to all of the second connection plate 110, the front left portion 111 and the front right portion 112, but may be screwed to at least one of the second connection plate 110, the front left portion 111 and the front right portion 112.

### (3) Base

As shown in Fig. 3, the base 102 defines a lower end of the housing 2 (also see Fig. 1), and has a generally cuboidal shape having a smaller thickness as measured vertically. The base 102 has an outer peripheral edge portion, as seen in plan, which entirely projects upward from an upper face thereof. Therefore, the upper face of the base 102 has a recess 135 surrounded by the outer peripheral edge portion. Here, the lowermost portion of the recess 135 is equivalent to the upper face of the base 102. The tank 11, the filter unit 15, the drying pump 23 and the circulation pump 25 described above are disposed in the recess 135, and fixed to the base 102. Further, the base 102 has exposure holes 136 respectively formed in a left side face and a right side face thereof (also see Fig. 4). One end of the aforementioned drain passage 49 (see Fig. 5) is exposed selectively from either of the exposure holes 136 of the left side face and the right side face of the base 102 (in Fig. 4, the exposure hole 136 of the right side face).

Here, the aforementioned dampers 14 include two dampers 14 disposed in spaced relation on transversely opposite sides of the tank 11. Lower ends of the dampers 14 are connected to the upper face of the base 102, and accommodated in the recess 135. Upper ends of the dampers 14 are fixed to a lower portion of an outer peripheral surface of the washing tub 3 (more specifically, the outer tub 4). In other words, the outer tub 4 is attached to the base 102 via the dampers 14, and supported by the dampers 14 so as to be levitated from the base 102. Though not shown, two coil springs each having a relatively small restoring force are provided between a lower portion of the front face of the outer tub 4 and the second connection plate 110 of the frame 101 (see Fig. 6). Thus, the outer tub 4 is supported not only by the aforementioned dampers 14 but also by the coil springs.

The base 102 has a plurality of grooves 137 provided in upper edge portions of the left side face, the right side face and the rear face thereof (vertical portions defining the recess 135) as being indented toward the recess 135 (also see Figs. 4 and 7). The grooves 137 are each vertically elongated, and each have a small hole 138 formed in an upper end portion thereof as communicating with the recess 135 (see Figs. 4 and 7).

The base 102 has bosses 129 integrally provided on transversely opposite ends of the upper edge portion of the front face thereof as projecting forward. The bosses 129 each have a screw hole 139 formed in a front end face thereof. The base 102 has receiving portions 140 integrally provided above the respective bosses 129 on the upper edge portion of the front face thereof. The receiving portions 140 each have a transversely elongated generally cuboidal shape. The receiving portions 140 and the bosses 129 project forward substantially the same distance.

The base 102 has bars 141 integrally provided at transversely opposite ends of the front edge portion and a rear edge portion thereof as extending downward (also see Figs. 2 and 4). Lower end faces of the respective bars 141 of the base 102 abut against an installation surface. Rings 142 are respectively fitted around two of the bars 141 disposed on the front side. The rings 142 are turned in a predetermined direction to be thereby moved downward with respect to the bars 141 to be brought into contact with the installation surface. Accordingly, the front portion of the base 102 is lifted. Thus, the attitude of the overall washing machine 1 including the base 102 is adjusted.

### (4) How to Combine Frame with Base

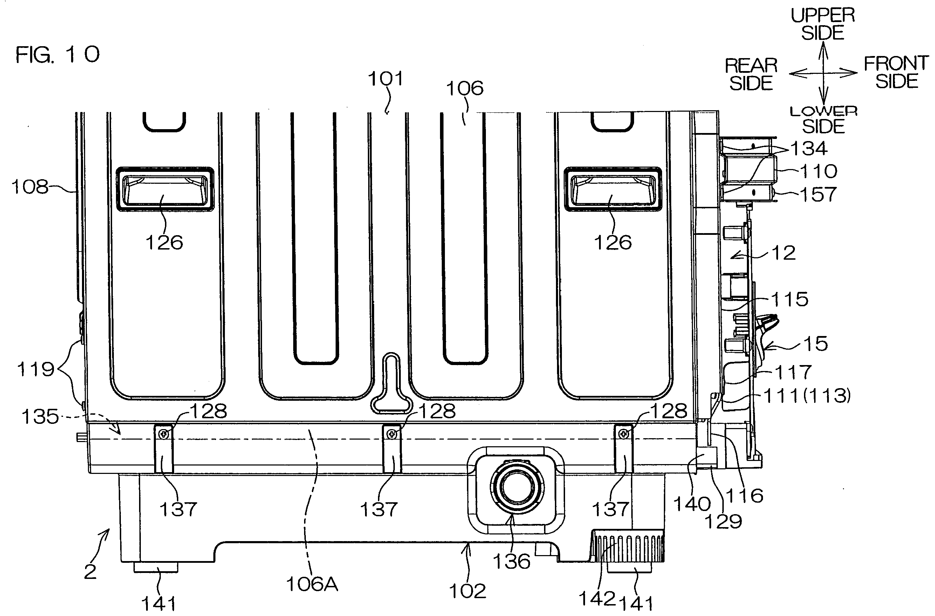

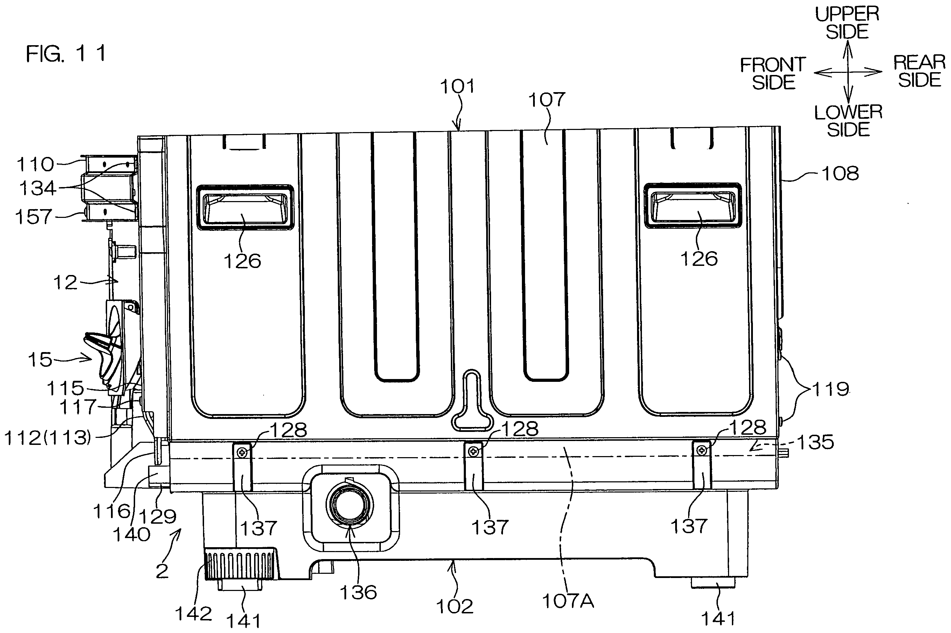

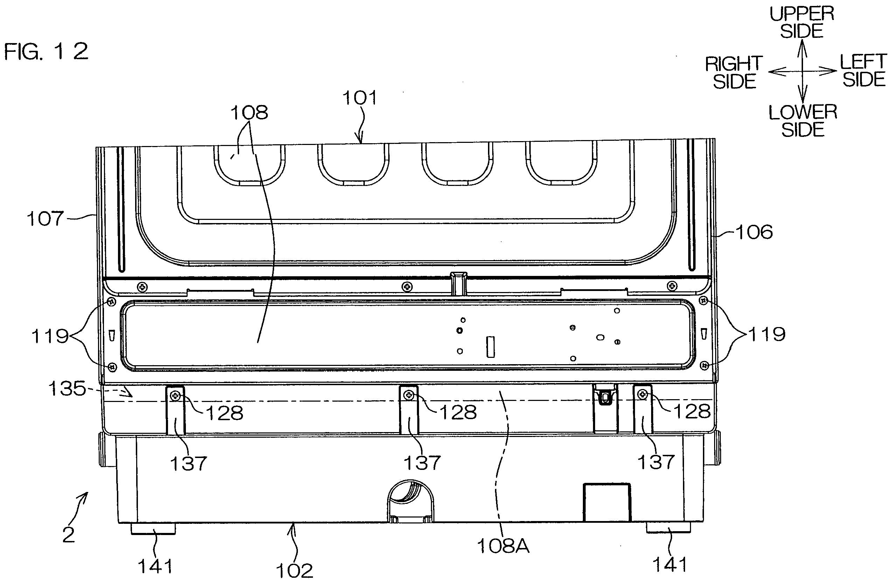

Fig. 10 is a left side view of the lower portion of the washing machine 1 in a state corresponding to that shown in Fig. 9. Fig. 11 is a right side view of the lower portion of the washing machine 1 in a state corresponding to that shown in Fig. 9. Fig. 12 is a rear view of the lower portion of the washing machine 1 in a state corresponding to that shown in Fig. 9.

Next, how to combine the frame 101 with the base 102 will be described. As shown in Fig. 7, the frame 101 is first placed on the upper face of the base 102.

In this state, a lower end portion of the frame 101 is fitted in the recess 135 (see Fig. 4) on the upper face of the base 102. More specifically, the lower edge portion 106A of the left side face plate 106 (see Fig. 6), the lower edge portion 107A of the right side face plate 107 (see Fig. 6) and the lower edge portion 108A of the rear face plate 108 (see Fig. 6) of the frame 101 are disposed in the recess 135 (see Fig. 4) on the upper face of the base 102 (also see Figs. 10 to 12).

In this state, the lower end of the front left portion 111 of the frame 101 (more specifically, the lower end of the thicker portion 116 of the vertical portion 113 projecting downward from the thinner portion 115) is opposed to an upper end face of the left receiving portion 140 of the base 102 from the upper side in slightly spaced relation. Similarly to the front left portion 111, the lower end of the front right portion 112 is opposed to an upper end face of the right receiving portion 140 of the base 102 from the upper side in slightly spaced relation. Where an impact or the like is unexpectedly applied to the washing machine in a direction such as to move down the front portion of the frame 101 (the front left portion 111, the front right portion 112 and the second connection plate 110), for example, the lower ends of the front left portion 111 and the front right portion 112 are respectively brought into abutment against the receiving portions 140. That is, the lower portion of the front portion of the frame 101 (the front lower portion of the frame 101) is received by the receiving portions 140. This prevents displacement of the front portion of the frame 101.

In this state, the screw holes 127 (see Fig. 6) of the lower edge portion 106A of the left side face plate 106 and the lower edge portion 107A of the right side face plate 107 and the screw holes (not shown) of the lower edge portion 108A of the rear face plate 108 (see Fig. 12) are opposed to the corresponding small holes 138 of the left side face, the right side face and the rear face of the base 102 as shown in Fig. 7. Screws 128 shown in Figs. 10, 11 and 12 are respectively inserted through the small holes 138 to be fixed in the corresponding screw holes (the screw holes 127 and the screw holes (not shown) of the rear face plate 108). Thus, the lower portion of the left side face of the frame 101 (the lower edge portion 106A of the left side face plate 106) is screwed to the left portion (left side face) of the base 102 as shown in Fig. 10. As shown in Fig. 11, the lower portion of the right side face of the frame 101 (the lower edge portion 107A of the right side face plate 107) is screwed to the right portion (right side face) of the base 102. As shown in Fig. 12, the lower portion of the rear face of the frame 101 (the lower edge portion 108A of the rear face plate 108) is screwed to the rear portion (rear face) of the base 102. In this state, the screws 128 are fitted in the corresponding grooves 137 and, therefore, do not project outward of the left side face, the right side face and the rear face of the base 102.

On the other hand, as shown in Fig. 9, the front portion of the frame 101 (more specifically, the front lower portion including the second connection plate 110, the front left portion 111 and the front right portion 112) and the control box 12 screwed to the front portion of the frame 101 as described above are out of contact with the base 102, and unfixed to the base 102. The control box 12 is spaced leftward from the filter unit 15.

### (5) Upper Cover

As shown in Fig. 1, the upper cover 103 defines the generally upper half of the front face of the housing 2 inclined obliquely upward toward the rear side. The upper cover 103 is made of a resin, for example, and has a vertically elongated generally rectangular shape as seen from the front side. The door 10 is disposed generally at the center of the upper cover 103 as seen from the front side, and the operation/display section 13 is disposed on an upper edge portion of the upper cover 103. The upper cover 103 is fixed to the frame 101 (see Fig. 6) to cover a generally upper half of the front portion of the frame 101 from the outer side (from the front side). In this state, a left end face of the upper cover 103 is generally flush with a left face of the left side face plate 106 (see Fig. 6) of the frame 101, and a right end face of the upper cover 103 is generally flush with a right face of the right side face plate 107 of the frame 101.

### (6) Lower Cover

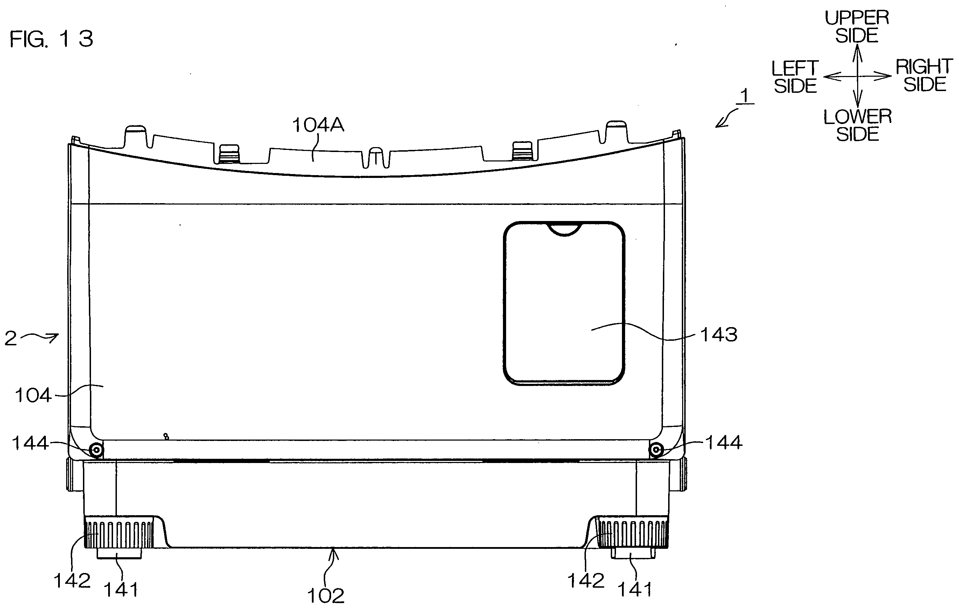

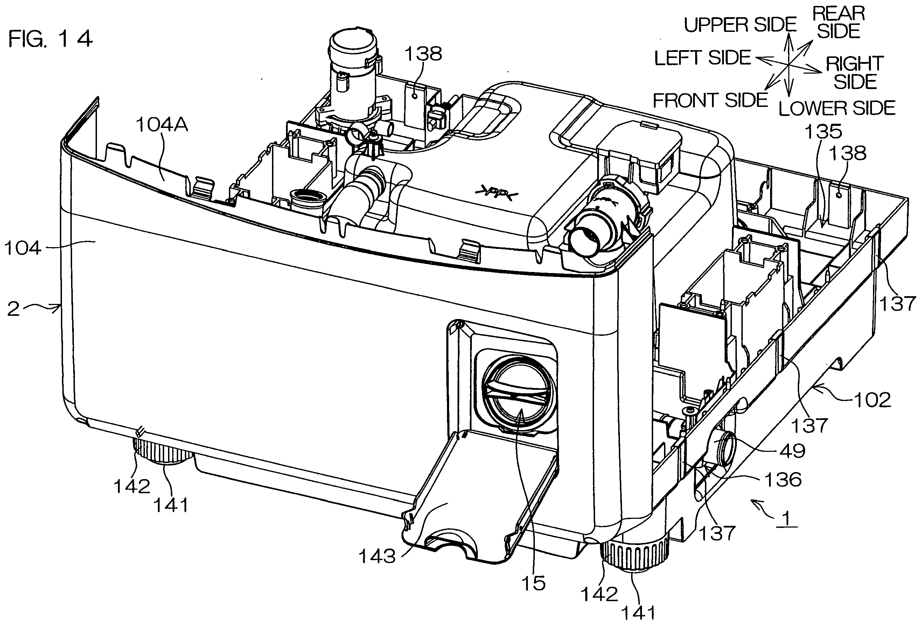

Fig. 13 is a diagram of the lower cover 104 attached to the base 102 as seen from the front side. Fig. 14 is a diagram of the lower cover 104 attached to the base 102 as seen obliquely from the front side.

The lower cover 104 defines the generally lower half of the front face of the housing 2. The lower cover 104 is made of a resin, for example, and has a transversely elongated generally rectangular shape as seen from the front side. A lid 143 is provided on a right end portion of the lower cover 104 in an openable manner. With the lid 143 being open, as shown in Fig. 14, the filter unit 15 is exposed. As shown in Fig. 13, small holes 144 are provided at transversely opposite ends of a lower edge portion of the lower cover 104 as extending anteroposteriorly through the lower cover 104.

The left small hole 144 is opposed to the left screw hole 139 (see Fig. 3) of the front face of the base 102, and the right small hole 144 is opposed to the right screw hole 139 (see Fig. 3) of the front face of the base 102. Screws (not shown) are respectively inserted through the small holes 144 to be fixed in the screw holes 139, whereby a lower portion of the lower cover 104 is screwed to the front face of the base 102. In this state, the lower cover 104 covers the generally lower half of the front portion of the frame 101 (see Fig. 6) from the outer side (front side). The lower cover 104 is thus fixed to the base 102, but unfixed to the frame 101.

In this state, as shown in Fig. 1, a left end face of the lower cover 104 is generally flush with the left side face of the left side face plate 106 (see Fig. 6) of the frame 101, and a right end face of the lower cover 104 is generally flush with the right side face of the right side face plate 107 of the frame 101.

An upper portion of the lower cover 104 (an upper edge portion 104A shown in Figs. 13 and 14) is disposed behind a lower portion (lower edge portion 103A) of the upper cover 103 as indicated by a broken line in Fig. 1. In this state, the upper edge portion 104A of the lower cover 104 engages the lower edge portion 103A of the upper cover 103 with a play. That is, the lower cover 104 is not fixed to the upper cover 103.

### (7) Top Cover

The top cover 105 has a generally rectangular shape as seen in plan. More specifically, the top cover 105 is bent so as to fit along the cut-away portions 118 (see Fig. 6) of the left side face plate 106 and the right side face plate 107 of the frame 101 as seen transversely. The top cover 105 is fixed to the frame 101 so as to close the aforementioned open top of the frame 101 from the upper side.

In this state, a left end face of the top cover 105 is generally flush with the left surface of the left side face plate 106 (see Fig. 6), and a right end face of the top cover 105 is generally flush with the right face of the right side face plate 107. A front edge of the top cover 105 is continuous to an upper edge of the upper cover 103, and a rear edge of the top cover 105 is continuous to an upper edge of the rear face plate 108 of the frame 101 (see Fig. 6).

As described above, the washing machine 1 is entirely supported by the base 102 defining the lower end of the housing 2. As shown in Fig. 3, the outer tub 4 is attached to the base 102 via the plurality of dampers 14, and supported by the dampers 14 so as to be levitated from the base 102. The drum 5 is rotatably provided in the outer tub 4. Therefore, when the outer tub 4 is vibrated due to the rotation of the drum 5, the vibrations are often transmitted to the base 102 because of insufficient absorption of the vibrations by the dampers 14.

The lower edge portion 106A of the left side face plate 106, the lower edge portion 107A of the right side face plate 107 and the lower edge portion 108A of the rear face plate 108 of the frame 101 surrounding the outer tub 4 as shown in Fig. 7 are screwed to the base 102 (see Figs. 10 to 12). However, as shown in Fig. 9, the front portion (more specifically, the front left portion 111, the front right portion 112 and the second connection plate 110) of the frame 101, and the control box 12 screwed to the front portion of the frame 101 are not fixed to the base 102. Therefore, the vibrations of the outer tub 4 occurring due to the rotation of the drum 5 are substantially prevented from being transmitted from the base 102 to the front portion of the frame 101. This suppresses the vibrations of the front portion of the frame 101, which is an eye-catching portion of the washing machine 1, thereby improving the appearance of the washing machine 1 during the operation.

The upper cover 103 and the lower cover 104 cover the front portion (see Fig. 6) of the frame 101 from the outer side as shown in Fig. 1. The upper cover 103 is fixed to the frame 101, and the upper edge portion 104A of the lower cover 104 engages the lower edge portion 103A of the upper cover 103 with a play. The lower portion of the lower cover 104 is screwed to the base 102, and the lower cover 104 is not fixed to the frame 101.

Thus, the vibrations of the outer tub 4 occurring due to the rotation of the drum 5 are transmitted from the base 102 to the lower cover 104, but the transmission of the vibrations to the upper cover 103 and the front portion of the frame 101 are suppressed. This suppresses the vibrations of the front portion of the frame 101 and the vibrations of the top cover 103, which is a particularly eye-catching portion of the front portion, thereby improving the appearance of the washing machine 1 during the operation.

It should be understood that the present invention be not limited to the embodiment described above, but various modifications may be made within the scope of the following claims.

For example, the frame 101 may be configured such that the front lower portion thereof (see Fig. 6) and the rear lower portion thereof (the lower edge portion 108A of the rear face plate 108 shown in Fig. 7) are unfixed to the base 102. In this case, the vibrations of the outer tub 4 occurring due to the rotation of the drum 5 are substantially prevented from being transmitted from the base 102 to the front portion and the rear face of the frame 101. This also suppresses the vibrations of the front portion of the frame 101, which is an eye-catching portion of the washing machine 1, thereby improving the appearance of the washing machine 1 during the operation.

## Claims

1. A washing machine (1), comprising:
a base (102) defining a lower end of a washing machine body;
an outer tub (4) attached to the base (102) via a plurality of dampers (14) and having an opening (8) provided on a front side thereof for loading and unloading garment;
a rotary drum (5) rotatably provided in the outer tub (4) for containing the garment loaded through the opening (8);
a frame (101) surrounding the outer tub (4); and
a door (10) which covers and uncovers the opening (8);
wherein the frame (101) includes a left side face plate (106), a right side face plate (107), a rear face plate (108) provided between the rear edges of the left side face plate (106) and the right side face plate (107) to connect them, a first connection plate (109) and a second connection plate (110) provided between the front end portions of the left side face plate (106) and the right side face plate (107) to connect them;
wherein the frame (101) has a generally elongated hollow cuboidal shape with an open top and an open bottom;
wherein the front ends of the left side face plate (106) and the right side face plate (107) of the frame are bent inwardly respectively to form a front left portion (111) and front right portion (112);
wherein a front portion of the frame (101) includes the vertically elongated front left portion (111), the vertically elongated front right portion (112) and the second connection plate (110) which connects the front left portion (111) and the front right portion (112);
wherein a lower portion of the left side face plate (106) of the frame (101) is fixed to a left portion of the base (102) by a screw;
wherein a lower portion of the right side face plate (107) of the frame (101) is fixed to a right portion of the base (102) by a screw; and
**characterized in that** the front portion of the frame (101) is unfixed to the base.

2. The washing machine (1) according to claim 1, further comprising a control box (12) incorporating a control circuit for controlling a laundry process, and disposed in a front lower portion of the frame; **characterized in that** a lower portion of the rear face plate (108) of the frame (101) is fixed to a rear portion of the base (102) by a screw;
the control box (12) is fixed to the second connection plate (110) of the frame (101) by a screw; and
the control box (12) is unfixed to the base.

3. The washing machine (1) according to claim 2,
wherein the base (102) integrally includes a receiving portion which receives the front lower portion of the frame (101).

4. The washing machine (1) according to claim 2 or 3,
wherein an upper portion of the control box (12) is fixed to the second connection plate (10) by a screw.

5. The washing machine (1) according to claim 4,
wherein the control box (12) is also fixed to the front left portion (111) and/or the front right portion (112) by a screw.

6. The washing machine (1) according to any of claims 2 to 5, further comprising an upper member (103) and a lower member (104) covering the front portion of the frame (101) from an outer side,
wherein the upper member (103) is fixed to the frame (101),
wherein an upper portion of the lower member (104) engages a lower portion of the upper member (103) with a play,
wherein a lower portion of the lower member (104) is fixed to the base (102) by a screw,
wherein the lower member (104) is unfixed to the frame (101).

## Patentansprüche

1. Waschmaschine (1), die Folgendes umfasst:
eine Basis (102), die ein unteres Ende eines Waschmaschinenkörpers definiert;
einen äußeren Bottich (4), der an der Basis (102) mittels einer Anzahl an Dämpfern (14) angebracht ist und eine Öffnung (8) aufweist, die an einer Vorderseite davon zum Beladen und Entladen von Bekleidung bereitgestellt ist;
eine Drehtrommel (5), die in dem äußeren Bottich (4) drehbar bereitgestellt ist, zum Aufnehmen der Wäsche, die durch die Öffnung (8) eingeladen wird;
einen Rahmen (101), der den äußeren Bottich (4) umgibt; und
eine Tür (10), welche die Öffnung (8) abdeckt und freigibt;
wobei der Rahmen (101) eine linksseitige Frontplatte (106),
eine rechtseitige Frontplatte (107), eine rückwärtige Frontplatte (108), die zwischen den rückwärtigen Kanten der linksseitigen Frontplatte (106) und der rechtseitigen Frontplatte (107) bereitgestellt ist, um sie zu verbinden,
eine erste Verbindungsplatte (109) und eine zweite Verbindungsplatte (110), die zwischen den vorderseitigen Teilen der linksseitigen Frontplatte (106) und der rechtseitigen Frontplatte (107) bereitgestellt sind, um sie zu verbinden, einschließt;
wobei der Rahmen (101) eine allgemein gestreckte, hohle quaderförmige Form mit einer offenen Oberseite und einer offenen Unterseite aufweist;
wobei die vorderen Enden der linksseitigen Frontplatte (106) und der rechtseitigen Frontplatte (107) des Rahmens jeweils nach innen gebogen sind, um einen vorderen linken Teil (111) und einen vorderen rechten Teil (112) zu bilden;
wobei ein vorderer Teil des Rahmens (101) den vertikal gestreckten vorderen linken Teil (111), den vertikal gestreckten vorderen rechten Teil (112) und die zweite Verbindungsplatte (110), welche den vorderen linken Teil (111) und den vorderen rechten Teil (112) verbindet, einschließt;
wobei ein unterer Teil der linksseitigen Frontplatte (106) des Rahmens (101) an einem linken Teil der Basis (102) durch eine Schraube fixiert ist;
wobei ein unterer Teil der rechtseitigen Frontplatte (107) des Rahmens (101) an einem rechten Teil der Basis (102) durch eine Schraube fixiert ist; und
**dadurch gekennzeichnet, dass** der vordere Teil des Rahmens (101) an der Basis nicht fixiert ist.

2. Waschmaschine (1) gemäß Anspruch 1, die weiter einen Steuerkasten (12) umfasst, der eine Steuerschaltung zum Steuern eines Waschvorgangs einschließt und in einem vorderen unteren Teil des Rahmens angeordnet ist; **dadurch gekennzeichnet, dass** ein unterer Teil der rückwärtigen Frontplatte (108) des Rahmens (101) an einem rückwärtigen Teil der Basis (102) durch eine Schraube fixiert ist;
der Steuerkasten (12) an der zweiten Verbindungsplatte (110) des Rahmens (101) durch eine Schraube fixiert ist; und
der Steuerkasten (12) an der Basis nicht fixiert ist.

3. Waschmaschine (1) gemäß Anspruch 2,
wobei die Basis (102) integral einen Aufnahmeteil einschließt, der den vorderen unteren Teil des Rahmens (101) aufnimmt.

4. Waschmaschine (1) gemäß Anspruch 2 oder 3,
wobei ein oberer Teil des Steuerkastens (12) an der zweiten Verbindungsplatte (10) durch eine Schraube fixiert ist.

5. Waschmaschine (1) gemäß Anspruch 4,
wobei der Steuerkasten (12) auch an dem vorderen linken Teil (111) und/oder dem vorderen rechten Teil (112) durch eine Schraube fixiert ist.

6. Waschmaschine (1) gemäß einem der Ansprüche 2 bis 5, die weiter ein oberes Element (103) und ein unteres Element (104), welche den vorderen Teil des Rahmens (101) von einer Außenseite abdecken, umfasst,
wobei das obere Element (103) an dem Rahmen (101) fixiert ist, wobei ein oberer Teil des unteren Elements (104) mit einem Spielraum in einen unteren Teil des oberen Elements (103) eingreift,
wobei ein unterer Teil des unteren Elements (104) an der Basis (102) durch eine Schraube fixiert ist,
wobei das untere Element (104) an dem Rahmen (101) nicht fixiert ist.

## Revendications

1. Machine à laver (1), comprenant :
une base (102) définissant une extrémité inférieure d'une caisse de machine à laver ;
une cuve externe (4) fixée à la base (102) via une pluralité d'amortisseurs (14) et ayant une ouverture (8) ménagée sur un côté avant de celle-ci pour charger et décharger des vêtements ;
un tambour rotatif (5) ménagé en rotation dans la cuve externe (4) pour contenir les vêtements chargés à travers l'ouverture (8) ;
un cadre (101) entourant la cuve externe (4) ; et
une porte (10) qui couvre et découvre l'ouverture (8) ;
dans laquelle le cadre (101) inclut une plaquette côté gauche (106), une plaquette côté droit (107), une plaquette arrière (108) ménagée entre les bords arrière de la plaquette côté gauche (106) et de la plaquette côté droit (107) pour les relier, une première plaque de liaison (109) et une deuxième plaque de liaison (110) ménagées entre les portions d'extrémité avant de la plaquette côté gauche (106) et de la plaquette côté droit (107) pour les relier ;
dans laquelle le cadre (101) a une forme cuboïde creuse généralement allongée avec un sommet ouvert et un fond ouvert ;
dans laquelle les extrémités avant de la plaquette côté gauche (106) et de la plaquette côté droit (107) du cadre sont courbées vers l'intérieur respectivement pour former une portion avant gauche (111) et une portion avant droite (112) ;
dans laquelle une portion avant du cadre (101) inclut la portion avant gauche allongée verticalement (111), la portion avant droite allongée verticalement (112) et la deuxième plaque de liaison (110) qui relie la portion avant gauche (111) et la portion avant droite (112) ;
dans laquelle une portion inférieure de la plaquette côté gauche (106) du cadre (101) est fixée à une portion gauche de la base (102) par une vis ;
dans laquelle une portion inférieure de la plaquette côté droit (107) du cadre (101) est fixée à une portion droite de la base (102) par une vis ; et
**caractérisée en ce que** la portion avant du cadre (101) est non fixée à la base.

2. Machine à laver (1) selon la revendication 1, comprenant en outre une boîte de commande (12) incorporant un circuit de commande pour commander un processus de lavage, et disposée dans une portion inférieure avant du cadre ; **caractérisée en ce qu'**une portion inférieure de la plaquette arrière (108) du cadre (101) est fixée à une portion arrière de la base (102) par une vis ;
la boîte de commande (12) est fixée à la deuxième plaque de liaison (110) du cadre (101) par une vis ; et
la boîte de commande (12) est non fixée à la base.

3. Machine à laver (1) selon la revendication 2,
dans laquelle la base (102) inclut solidairement une portion réceptrice qui reçoit la portion inférieure avant du cadre (101).

4. Machine à laver (1) selon la revendication 2 ou 3,
dans laquelle une portion supérieure de la boîte de commande (12) est fixée à la deuxième plaque de liaison (10) par une vis.

5. Machine à laver (1) selon la revendication 4,
dans laquelle la boîte de commande (12) est également fixée à la portion avant gauche (111) et/ou la portion avant droite (112) par une vis.

6. Machine à laver (1) selon l'une quelconque des revendications 2 à 5, comprenant en outre un organe supérieur (103) et un organe inférieur (104) couvrant la portion avant du cadre (101) depuis un côté externe,
dans laquelle l'organe supérieur (103) est fixé au cadre (101),
dans laquelle une portion supérieure de l'organe inférieur (104) engage une portion inférieure de l'organe supérieur (103) avec un jeu,
dans laquelle une portion inférieure de l'organe inférieur (104) est fixée à la base (102) par une vis,
dans laquelle l'organe inférieur (104) est non fixé au cadre (101).
